# EUROPEAN PATENT SPECIFICATION

(11) **EP 1 028 018 B1**
(45) Date of publication and mention of the grant of the patent: **28.04.2004**
(21) Application number: 00300435.5
(22) Date of filing: 21.01.2000
(51) Int. Cl.: B60K 15/077

(54) **Vehicle fuel rerservoir pot**
Stautopf für Fahrzeugkraftstoff
Bol anti-désamorçage pour le réservoir d'un véhicule

(30) Priority: 11.02.1999 GB 9902982
(43) Date of publication of application: 16.08.2000
(73) Proprietor: Land Rover Group Limited, Lighthorne, Warwick CV35 0RG (GB)
(72) Inventor: Whittaker, Howard Iain, 85445 Schwaig (DE)
(74) Representative: Farrow, Robert Michael

(56) References cited:
- EP-A- 0 803 394
- DE-A- 3 927 688
- GB-A- 1 515 800
- US-A- 5 699 773

## Description

The invention relates to reservoir pots for motor vehicle fuel tanks. Typically such pots have a base which rests on the floor of a fuel tank and an upstanding side wall extending from the base for containing a reserve volume of liquid fuel. A top-up pump draws fuel through an inlet port in the base from the fuel tank and into the pot for replenishment of the reserve volume. Usually an electric motor driven fuel pump is in the pot and supplies fuel to an engine of the vehicle. The top-up pump may be a jet pump driven by fuel diverted from the fuel delivered by the electrically driven pump or may be a separate pumping element of the fuel pump. A reservoir pot incorporating a jet pump is shown in GB-A-1 515 800 whereas US-A-5 699 773 on which the preamble of claim 1 is based, shows a more modern arrangement.

In US-A-5 699 773 the jet pump draws fuel from an inlet chamber beneath the base of the reservoir pot, the inlet chamber being bounded below by the floor of the fuel tank. However, it has been found advantageous to provide a separate baffle plate below the inlet chamber. In use, the inlet chamber is normally situated towards the rear of the vehicle when the reservoir pot is mounted in the fuel tank so that fuel tends to be trapped in the inlet chamber when the vehicle is accelerating or on an upward slope. On the other hand, if the vehicle is on a downward slope, fuel tends to drain out of the inlet chamber through an aperture between the base of the reservoir pot and the baffle plate. This can cause problems if the slope is severe and fuel is very low in the tank because not only is there no fuel surrounding the base to enable the reservoir pot to be topped-up but fuel tends to be lost from the inlet chamber out of the inlet aperture. The filter rings and webs according to US-A-5 699 773 do not represent upstanding weirs.

The present invention aims to alleviate the problem of fuel loss as described above.

According to the present invention there is provided a reservoir pot for a motor vehicle fuel tank in accordance with claim 1.

Conveniently, the baffle plate has an upstanding weir which partially obstructs the inlet aperture. Preferably, the weir may extend for a substantial distance in the direction of fuel flow through the aperture.

A downwardly extending lip may extend across the inlet aperture, preferably between the weir and the inlet port. This helps to further restrict the loss of fuel droplets through the inlet aperture if the fuel level falls as described above.

Preferably, the inlet aperture is, in use, arranged to face the normal direction of travel of the vehicle.

Conveniently, an electrically driven pump is in the pot for the supply of fuel to an engine of the vehicle.

The top-up pump may be a jet pump having an inlet formed by the inlet port, a jet nozzle for connection to a source of fuel under pressure and a diffuser duct connected to the reserve volume, in which case a non-return valve may be provided to prevent fuel from flowing from the reserve volume through the diffuser duct.

The invention will now be described by way of example and with reference to the accompanying drawings of which:-
Fig.1 is a diagrammatic cross-section of a motor vehicle fuel tank incorporating a reservoir pot according to the invention;
Fig.2 is a cross-section through part of the fuel tank and reservoir pot shown in Fig. 1;
Fig.3 is a view in the direction of arrow D in Fig.2 with certain parts removed;
Fig.4 is a plan view of a component shown in Fig.2 viewed in the opposite direction to that of Fig.3;
Fig.5 is a cross-section on the line V-V in Fig.2 showing a jet pump in more detail; and
Fig.6 is a scrap-section based on part of Fig.2 and showing a modification.

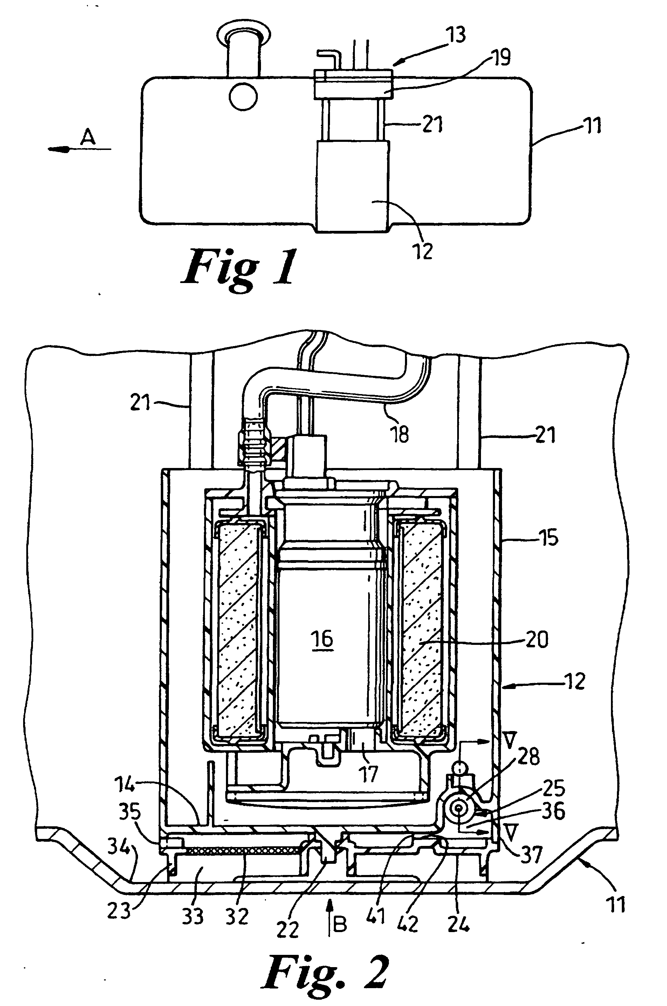

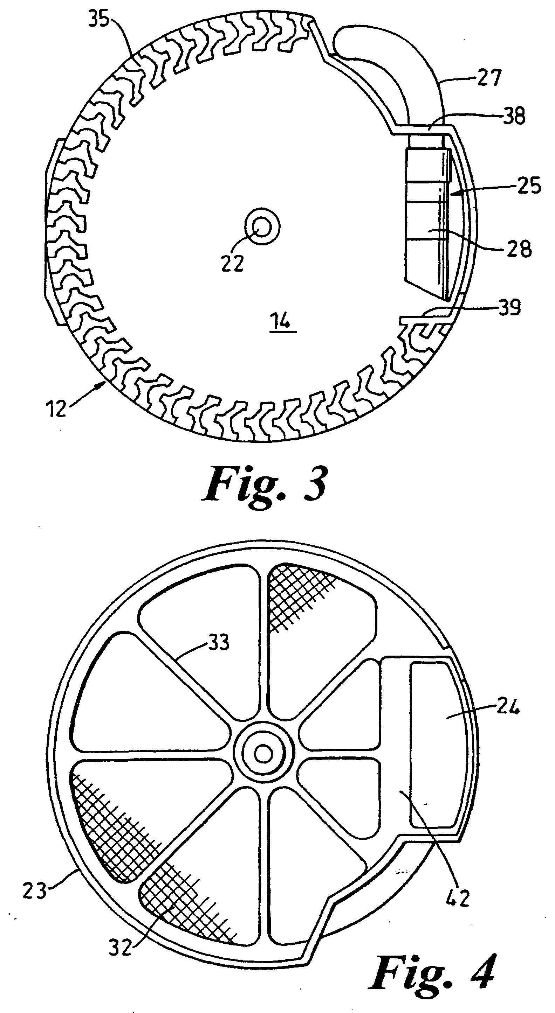

Referring to Figs.1 to 5, a motor vehicle fuel tank 11 is fitted with a reservoir pot 12 which forms part of a tank module 13 which is fitted through an aperture in the roof of the tank 11. The pot 12 has a base 14 and an upstanding cylindrical side wall 15 extending from the base. An electric motor driven fuel pump 16 is contained within the pot 12 and this can draw fuel through an inlet connection 17 and deliver it through a cylindrical filter 20 and a flexible pipe 18 to a mounting flange 19 which closes the aperture in the roof of the tank 11. The pot 12 is connected to the mounting flange 19 by support struts 21 which also resiliently bias the pot 12 towards the floor of the tank 11.

The base 14 has a mounting spigot 22 on which is fitted a generally circular filter disc 23 which incorporates a baffle plate 24 located below a top-up pump in the form of a jet pump 25. The jet pump 25 is generally as described in US 5,564,397 and includes a nozzle 26 supplied by a flexible pipe 27 which delivers fuel under pressure from a pressure regulator (not shown) carried on the mounting flange 19. Fuel from the nozzle 26 is directed across an inlet port 28 and into a diffuser duct 29. A non-return valve 31 is provided to prevent back flow from the reserve volume inside the pot 12 through the diffuser duct 29.

The filter disc 23 comprises a filter mesh 32 supported on radial webs 33 which support the pot 12 on the floor of the tank 11 within a shallow depression 34 which helps to retain fuel around the base 14. As shown in US 5,699,773 the base 14 includes chevron-like teeth 35 to help filter fuel coming from the main volume in tank 11, these providing a parallel flow path to the path through the filter mesh 32.

An inlet chamber 36 is provided beneath the base 14 for the passage of fuel from the tank 11 to the inlet port 28 and this is bounded below by the baffle plate 24. The inlet chamber 36 also has side walls in the form of an extension 37 of the cylindrical side wall 15 and parallel side walls 38 and 39 which extend down from the base 14 to abut the filter disc 23. At its side facing radially inward the inlet chamber 36 is bounded by an inlet aperture 41 formed between the base 14 and the baffle plate 24 and this is partially obstructed by an upstanding weir 42 which extends across the full width of the aperture 41 to form a restricted flow path between the main volume of fuel in the tank 11 and the inlet chamber 36.

The fuel tank is mounted on the vehicle so that the inlet aperture 41 faces the normal direction of travel shown as arrow A in Fig. 1 so that the jet pump 25 is towards the rear of the reservoir pot 12. In normal use, fuel which jets across the inlet port 28 from the nozzle 26 draws additional fuel from the inlet chamber 36 into the diffuser duct 29 and through the non-return valve 31 to establish and maintain a reserve volume of fuel within the reservoir pot 12. If the main level of fuel in the tank 11 is below the top of the side wall 15 then excess fuel simply spills over but the reservoir pot 12 remains full.

If the level of fuel in the tank 11 becomes very low, the inlet aperture 41 will be exposed to air and the reserve volume inside the pot 12 will start to be used up, during which time the jet pump 25 merely recirculates fuel without adding any to the volume inside the pot. Under these conditions the inlet chamber 36 contains a mixture of air and fuel droplets, most of which are drawn back into the pot 12 through the diffuser duct 29. However, if the vehicle is in an extreme nose-down attitude, e.g. a 30% down slope, there is a tendency for fuel to drain from the inlet chamber 36 through the inlet aperture 41 so fuel is depleted from the reservoir pot 12 faster than it is being used up by the engine of the vehicle. This situation is exacerbated by fuel draining towards the front of the tank 11 away from the base of the pot 12. The weir 42 restricts the loss of fuel droplets through the inlet aperture 41 and in use has been found to give a much improved reserve performance compared to a reservoir pot having a completely flat baffle plate 24 without the weir 42.

The height of the inlet aperture 41, i.e. the gap between the top of the weir 42 and the base 14, is quite important for the successful operation of the invention. A gap of 0.5 mm has been found to operate successfully. A smaller gap may work better but may impair normal performance when the engine supplied by the reservoir pot is operated at full power. Similarly, it has been found beneficial to extend the weir for a substantial distance in the direction of fuel flow through the inlet aperture 41. A depth (distance in the direction of flow) of 10 to 20 mm has been found to be beneficial and gave much better results than a depth of only 3 mm

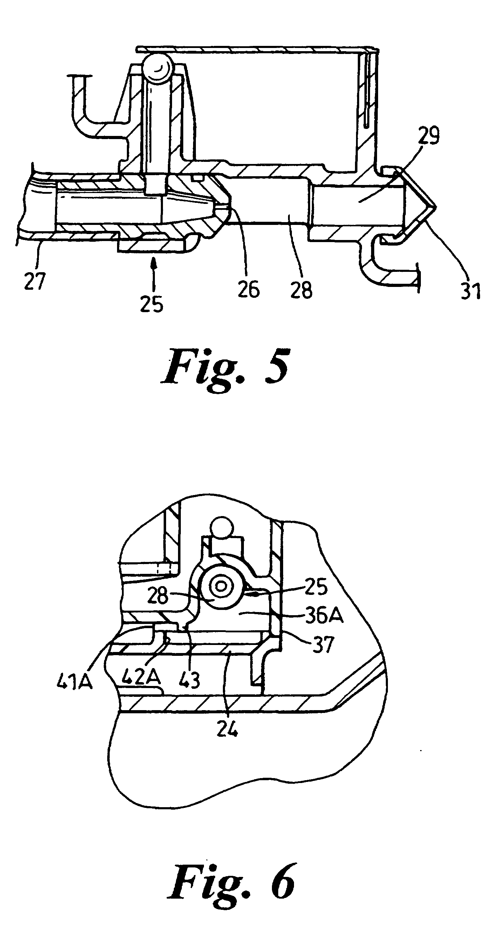

In the modification shown in Fig.6 the weir 42A is shorter (in the direction of fuel flow through the inlet aperture 41A) and a downwardly extending lip 43 extends across the inlet aperture between the weir 42A and the inlet port 28. The lip 43 further restricts the loss of fuel droplets through the inlet aperture 41 and acts as a drip rail to allow fuel droplets to fall onto the baffle plate 24A within the inlet chamber 36A. Obviously, downwardly extending lip 43 may be used with a weir similar to the weir 42 which extends for a substantial distance in the direction of fuel flow through the inlet aperture 41A.

It will be appreciated that the jet pump 25 may be replaced by an additional pumping element on the fuel delivery pump 16 in which case an inlet port or such a pump may still benefit from an inlet chamber with an inlet aperture and weir according to the invention.

## Claims

1. A reservoir pot (12) for a motor vehicle fuel tank (11), the pot (12) having a base (14) and an upstanding side wall (15) extending from the base (14) for containing a reserve volume of liquid fuel, an inlet port (28) in the base (14), a top-up pump for drawing fuel through the inlet port (28) from the fuel tank (11) into the inlet port (28) for replenishment of the reserve volume, an inlet chamber (36) beneath the base (14) for the passage of fuel from the tank (11) to the inlet port (28), the inlet chamber (36) being bounded below by a baffle plate (24) and on one side by an inlet aperture (41) formed between the base (14) and the baffle plate (24), wherein the inlet aperture (41) forms a restricted flow path between the main volume of fuel in the tank (11) and the inlet chamber (36), **characterised in that** the baffle plate (24) has an upstanding weir (42) which partially obstructs the inlet aperture (41), so as to restrict the loss of fuel droplets through the inlet aperture (41) if the fuel level in the tank falls below the aperture (41).

2. A reservoir pot according to claim 1, **characterised in that** the weir (42) extends for a substantial distance in the direction of fuel flow through the aperture (41).

3. A reservoir pot according to any preceding claim, **characterised in that** a downwardly extending lip (43) extends across the inlet aperture (41).

4. A reservoir pot according to claim 3, **characterised in that** the lip (43) extends across the inlet aperture (41) between the weir (42) and the inlet port (28).

5. A reservoir pot according to any preceding claim, **characterised in that** the inlet aperture (41) is, in use, arranged to face the normal direction of travel of the vehicle.

6. A reservoir pot according to any preceding claim, **characterised in that** an electrically driven pump (16) is in the pot (12) for the supply of fuel to an engine of the vehicle.

7. A reservoir pot according to any preceding claim, **characterised in that** the top-up pump is a jet pump (25) having an inlet formed by the inlet port (28), a jet nozzle (26) for connection to a source of fuel under pressure (16) and a diffuser duct (29) connected to the reserve volume.

8. A reservoir pot according to claim 7, **characterised in that** it further comprises a non-return valve (31) to prevent fuel from flowing from the reserve volume through the diffuser duct (29).

## Patentansprüche

1. Reservebehältnis (12) für einen Kraftfahrzeugkraftstofftank (11), wobei das Behältnis (12) eine Basis (14) und eine sich von der Basis (14) aus erstreckende aufrechte Seitenwand (15) hat, um ein Flüssigkraftstoffreservevolumen aufzunehmen, einen Einlaßkanal (28) in der Basis (14), eine Auffüllpumpe, um Kraftstoff durch den Einlaßkanal (28) aus dem Kraftstofftank (11) zwecks Auffüllung des Reservevolumens in den Einlaßkanal (28) abzuziehen, sowie eine Einlaßkammer (36) unterhalb der Basis (14) für den Durchgang von Kraftstoff aus dem Tank (11) zum Einlaßkanal (28) aufweist, wobei die Einlaßkammer (36) unten durch ein Prallblech (24) und an einer Seite durch eine zwischen der Basis (14) und dem Prallblech (24) ausgebildete Einlaßöffnung (41) begrenzt ist, wobei die Einlaßöffnung (41) einen eingeschränkten Strömungsweg zwischen dem Hauptkraftstoffvolumen im Tank (11) und der Einlaßkammer (36) bildet, **dadurch gekennzeichnet, daß** das Prallblech (24) ein aufrechtes Wehr (42) hat, das teilweise die Einlaßöffnung (41) abdeckt, um so den Verlust an Kraftstofftröpfchen durch die Einlaßöffnung (41) einzuschränken, wenn das Kraftstoffniveau im Tank unter die Öffnung (41) absinkt.

2. Reservebehältnis nach Anspruch 1, **dadurch gekennzeichnet, daß** sich das Wehr (42) über eine wesentliche Distanz in der Richtung der Kraftstoffströmung durch die Öffnung (41) erstreckt.

3. Reservebehältnis nach einem der vorstehend aufgeführten Ansprüche, **dadurch gekennzeichnet, daß** sich eine sich nach unten erstreckende Lippe (43) über die Einlaßöffnung (41) erstreckt.

4. Reservebehältnis nach Anspruch 3, **dadurch gekennzeichnet, daß** sich die Lippe (43) über die Einlaßöffnung (41) zwischen dem Wehr (42) und dem Einlaßkanal (28) erstreckt.

5. Reservebehältnis nach einem der vorstehend aufgeführten Ansprüche, **dadurch gekennzeichnet, daß** die Einlaßöffnung (41) im Gebrauch so vorgesehen ist, daß sie der normalen Fahrtrichtung des Fahrzeugs zugewandt ist.

6. Reservebehältnis nach einem der vorstehend aufgeführten Ansprüche, **dadurch gekennzeichnet, daß** sich eine elektrisch angetriebene Pumpe (16) im Behältnis (12) befindet, um Kraftstoff zu einem Motor des Fahrzeugs zu befördern.

7. Reservebehältnis nach einem der vorstehend aufgeführten Ansprüche, **dadurch gekennzeichnet, daß** die Auffüllpumpe eine Strahlpumpe (25) mit einem durch den Einlaßkanal (28) gebildeten Einlaß, einer Strahldüse (26) zur Verbindung mit einer druckbeaufschlagten Kraftstoffquelle (16) und einer mit dem Reservevolumen verbundenen Zerstäuberleitung (29) ist.

8. Reservebehältnis nach Anspruch 7, **dadurch gekennzeichnet, daß** es weiterhin ein Rückschlagventil (31) umfaßt, um zu verhindern, daß Kraftstoff aus dem Reservevolumen durch die Zerstäuberleitung (29) strömt.

## Revendications

1. Bol anti-désamorçage pour réservoir (12) pour un réservoir de carburant (11) de véhicule à moteur, le bol anti-désamorçage (12) comprenant une base (14) et une paroi latérale dressée (15) qui s'étend à partir de la base (14) pour contenir un volume de réserve d'un carburant liquide, un port d'entrée (28) dans la base (14), une pompe de remplissage pour aspirer du carburant à travers le port d'entrée (28) à partir du réservoir de carburant (11) dans le port d'entrée (28) afin de réapprovisionner le volume de réserve, une chambre d'entrée (36) située en dessous de la base (14) pour le passage de carburant à partir du réservoir (11) jusqu'au port d'entrée (28), la chambre d'entrée (36) étant délimitée en dessous par un déflecteur (24) et sur un côté par une ouverture d'entrée (41) formée entre la base (14) et le déflecteur (24), dans lequel l'ouverture d'entrée (41) forme un chemin d'écoulement étranglé entre le volume de carburant principal dans le réservoir (11) et la chambre d'entrée (36), **caractérisé en ce que** le déflecteur (24) comporte un barrage dressé (42) qui obture partiellement l'ouverture d'entrée (41), de manière à limiter la perte de gouttelettes de carburant à travers l'ouverture d'entrée (41) si le niveau de carburant dans le réservoir chute en dessous de l'ouverture (41).

2. Bol anti-désamorçage pour réservoir suivant la revendication 1, **caractérisé en ce que** le barrage (42) s'étend sur une distance substantielle dans le sens de l'écoulement du carburant à travers l'ouverture (41).

3. Bol anti-désamorçage pour réservoir suivant l'une quelconque des revendications précédentes, **caractérisé en ce qu'**une lèvre s'étendant vers le bas (43) s'étend à travers l'ouverture d'entrée (41).

4. Bol anti-désamorçage pour réservoir suivant la revendication 3, **caractérisé en ce que** la lèvre (43) s'étend à travers l'ouverture d'entrée (41) entre le barrage (42) et le port d'entrée (28).

5. Bol anti-désamorçage pour réservoir suivant l'une quelconque des revendications précédentes, **caractérisé en ce que** l'ouverture d'entrée (41) est, lors de l'utilisation, arrangée d'une façon opposée à la direction de déplacement normale du véhicule.

6. Bol anti-désamorçage pour réservoir suivant l'une quelconque des revendications précédentes, **caractérisé en ce qu'**une pompe entraînée électriquement (16) se trouve dans le bol anti-désamorçage (12) pour l'alimentation en carburant d'un moteur du véhicule.

7. Bol anti-désamorçage pour réservoir suivant l'une quelconque des revendications précédentes, **caractérisé en ce que** la pompe de remplissage est une pompe à jet (25) comportant une entrée formée par le port d'entrée (28), une tuyère d'injection (26) à connecter à une source de carburant sous pression (16) et une conduite de diffusion (29) reliée au volume de réserve.

8. Bol anti-désamorçage pour réservoir suivant la revendication 7, **caractérisé en ce qu'**il comprend en outre une soupape anti-retour (31) destinée à empêcher le carburant de refluer à partir du volume de réserve à travers la conduite de diffusion (29).
